**Europäisches Patentamt**

**European Patent Office**

**Office européen des brevets**

(19)

(11) Veröffentlichungsnummer: **0 283 783**
**B1**

(12) **EUROPÄISCHE PATENTSCHRIFT**

(45) Veröffentlichungstag der Patentschrift:
27.12.90

(51) Int. Cl.⁵: **B23K 3/04**

(21) Anmeldenummer: **88103239.5**

(22) Anmeldetag: **03.03.88**

(54) **Elektrisches Lötgerät.**

(30) Priorität: **17.03.87 DE 3708587**

(43) Veröffentlichungstag der Anmeldung:
**28.09.88 Patentblatt 88/39**

(45) Bekanntmachung des Hinweises auf die Patenterteilung:
**27.12.90 Patentblatt 90/52**

(84) Benannte Vertragsstaaten:
**DE ES FR GB IT**

(56) Entgegenhaltungen:
**GB-A- 2 124 124**
**GB-A- 2 163 081**
**US-A- 4 205 221**

(73) Patentinhaber: **REMS-WERK Christian Föll und Söhne GmbH & Co, Stuttgarter Strasse 83, D-7050 Waiblingen(DE)**

(72) Der Erfinder hat auf seine Nennung verzichtet

(74) Vertreter: **Kohl, Karl-Heinz, Patentanwälte Dipl.-Ing. A.K. Jackisch-Kohl Dipl.-Ing. K.H. Kohl Stuttgarter Strasse 115, D-7000 Stuttgart 30(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein elektrisches Lötgerät für Rohre nach dem Oberbegriff des Anspruches 1.

Solche elektrischen Lötgeräte werden vorzugsweise im Sanitärbereich zum Löten von Kupferrohren verwendet. Beim gattungsgemäßen Lötgerät (US-A 4 205 221) ist die schwenkbar angeordnete weitere Lötbacke einstückig mit dem Betätigungsglied ausgebildet. Um diese Lötbacke in Richtung auf ihre Greifstellung vorzuspannen, ist eine Schenkelfeder vorgesehen, die auf der Schwenkachse der weiteren Lötbacke angeordnet ist und sich mit ihrem einen Schenkelende am Gehäuse des Lötgerätes und mit ihrem anderen Ende an einem die Lötbacke mit dem Betätigungsteil verbindenden Verbindungsteil abstützt. Da die Schwenkachse mit großem Abstand von der weiteren Lötbacke nahe beim Betätigungsglied im Gehäuse vorgesehen ist, muß die Schenkelfeder relativ stark ausgebildet sein, um eine ausreichende Klemmkraft zu erreichen. Dementsprechend ist aber auch die Kraft zum Verstellen des Betätigungsgliedes relativ hoch, die die Bedienungsperson des Lötgerätes aufbringen muß.

Bei einem anderen bekannten Lötgerät (GB-A 2 124 124) ist ein Griff mit einer Lötbacke vorgesehen, die Kanäle zur Aufnahme von Heizelementen aufweist. An dieser Lötbacke ist die weitere Lötbacke schwenkbar gelagert. Als Betätigungselement zum Verstellen der weiteren Lötbacke ist ein weiterer Griff vorgesehen, der fest mit einem L-förmigen Verbindungsteil verbunden ist. Zum Verstellen der weiteren Lötbacke in ihre Offenstellung muß das Betätigungsglied nach unten über eine Totpunktlage geschwenkt werden. Erst dann kann die Lötbacke um ihre Schwenkachse gegenüber der anderen Lötbacke geschwenkt werden. Hierzu muß das Betätigungsglied mit dem Verbindungsteil weiter nach unten geschwenkt werden. Zum Schließen der weiteren Lötbacke muß dann wieder das Betätigungsglied nach oben geschwenkt werden, wobei es mit einem Vorsprung an einer Verlängerung der anderen Lötbacke zur Anlage kommt. Beim weiteren Verschwenken des Betätigungsgliedes mit dem Verbindungsteil rollt die Kante der Verlängerung an einer ebenen Unterseite der Verlängerung ab. Nachdem das Betätigungsglied über eine bestimmte Schräglage hinaus nach oben verschwenkt worden ist, wird die weitere Lötbacke im Uhrzeigersinn in ihre Greifstellung verschwenkt.

Dieses bekannte Lötgerät ist nicht nur konstruktiv umständlich und aufwendig ausgebildet; vielmehr ist auch das Verstellen der weiteren Lötbacke kompliziert. Sie muß konstruktiv besonders ausgebildet sein und zur Abstützung und zur Anlage des Verbindungsteiles eine Verlängerung aufweisen. Außerdem muß die weitere Lötbacke einen relativ langen Hebelarm haben, um die Schwenkbewegung des Betätigungsgliedes mit dem Verbindungsteil zu ermöglichen. Um ein unbeabsichtigtes Verschwenken des Griffes beim Lötvorgang zu vermeiden, muß er während des Lötvorgangs ständig so gehalten werden, daß er nicht versehentlich in Richtung auf seine Freigabestellung verstellt wird.

Bei einem anderen bekannten Lötgerät (GB-A 2 163 081) sind die Lötbacken jeweils mit gesonderten Heizelementen versehen. Die Lötbacken sind nicht unmittelbar miteinander verbunden. Dieses Lötgerät ist konstruktiv aufwendig ausgebildet und teuer in der Herstellung, da jeder Lötbacke jeweils ein Heizelement zugeordnet ist. Außerdem baut das Lötgerät infolge der beiden Heizelemente relativ groß.

Der Erfindung liegt die Aufgabe zugrunde, ein Lötgerät der eingangs genannten Art so auszubilden, daß auch bei einer kleinen Federkraft eine ausreichende Anpreßkraft der weiteren Lötbacke an das zu haltende Rohr auf einfache Weise erzielt werden kann.

Diese Aufgabe wird bei einem Lötgerät der gattungsbildenden Art erfindungsgemäß mit den Merkmalen des Anspruches 1 gelöst.

Bei dem erfindungsgemäßen Lötgerät ist das Verbindungsteil als Schub- bzw. Zugstange ausgebildet, die sowohl an der weiteren Lötbacke als auch am Betätigungsglied angelenkt ist. Dadurch kann auf konstruktiv einfache Weise mit dem Verbindungsteil eine ausreichende Klemmkraft der weiteren, schwenkbaren Lötbacke am Rohr erzielt werden. Hierzu genügt bereits eine kleine Federkraft. Dies hat den weiteren Vorteil, daß zum Verstellen des Betätigungsgliedes nur eine relativ kleine Kraft notwendig ist. Dies wirkt sich günstig auf die Handhabung und Bedienung des Gerätes aus.

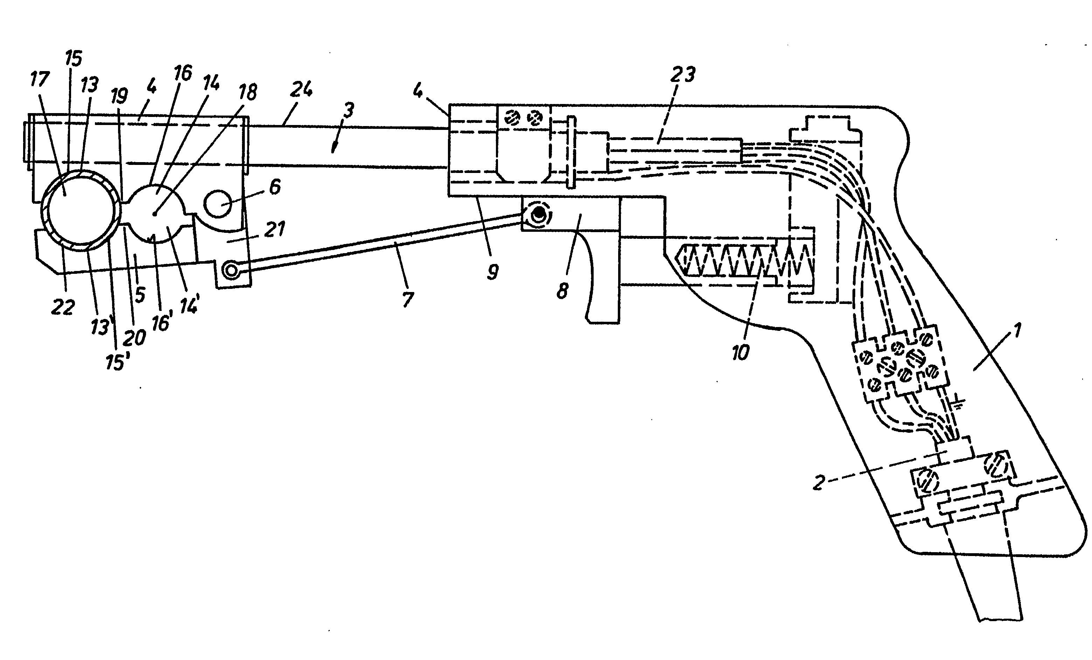

Weitere Vorteile der Erfindung ergeben sich aus den weiteren Ansprüchen, der Beschreibung und der Zeichnung.

Das elektrische Lötgerät dient zum Löten von Rohren, insbesondere von Kupferrohren im Sanitärbereich. Das Lötgerät hat ein Gehäuse 1, das gleichzeitig als Griff für das Lötgerät dient. Vorzugsweise ist das Gehäuse 1 bzw. der Griff als Pistolengriff eingebildet, so daß das Lötgerät vom Benutzer äußerst bequem gehandhabt werden kann. Vorzugsweise besteht das Gehäuse aus Kunststoff, insbesondere aus elektrisch isolierendem Kunststoff. In das Gehäuse 1 ist eine elektrische Zuleitung 2 geführt. Aus der Stirnseite 4 des Gehäuses 1 ist eine sogenannte Heizpatrone 3 geführt, in der mindestens ein Heizdraht 23 verläuft und die rohrförmig ausgebildet ist. Der Heizdraht 23 in der Heizpatrone 3 ist in bekannter Weise mit der elektrischen Zuleitung 2 elektrisch leitend verbunden. Auf dem freien Ende der Heizpatrone 3 sitzt eine Lötbacke 4, an der eine weitere Lötbacke 5 angelenkt ist. Die beiden Lötbacken 4 und 5 sind durch eine Schwenkachse 6 miteinander verbunden, die im Bereich des dem Gehäuse 1 zugewandten Endes der beiden Lötbacken vorgesehen ist. Die schwenkbare Lötbacke 5 ist an eine Zug- bzw. Schubstange 7 angelenkt, die mit ihrem anderen Ende an einem Betätigungsglied 8 angelenkt ist. Es ist vorzugsweise als Schieber ausgebildet, der in einer (nicht dargestellten) Schiebeführung an der Unterseite 9 des Gehäuses 1 verschiebbar gelagert ist. Das Betätigungsglied 8 steht unter der Kraft mindestens einer Druckfeder 10, die im Gehäuse 1 untergebracht ist.

Beide Lötbacken 4 und 5 weisen im Ausführungsbeispiel auf ihren einander zugewandten Seiten und jeweils zwei teilkreisförmige Vertiefungen 13, 13' und 14, 14' auf. Sie sind unterschiedlich groß und haben jeweils einen teilkreisförmig gekrümmten Boden 15, 15' und 16, 16'. Die Böden erstrecken sich jeweils über weniger als 180°, so daß bei geschlossenen Lötbacken 4 und 5 die durch die Vertiefungen gebildeten Aufnahmen 17 und 18 einen von der Kreisform abweichenden Umriß haben. Die benachbarten Vertiefungen 13, 14 und 13', 14' in den beiden Lötbacken 4 und 5 sind jeweils durch einen Steg 19 und 20 voneinander getrennt.

Die schwenkbare Lötbacke 5 hat einen Ansatz 21, mit der die Lötbacke 5 in einen Schlitz an dem dem Gehäuse 1 zugewandten Ende der Lötbacke 4 eingreift. Außerdem ist am Ansatz 21 die Zug- bzw. Schubstange 7 angelenkt. In der Schließstellung liegen die Lötbacken 4 und 5 mit ihren einander zugewandten Seiten 11 und 12 aneinander an.

Die Lötbacke 4 sitzt axial gesichert fest auf der Heizpatrone 3. Die Lötbacke 4 kann abnehmbar auf der Heizpatrone 3 angeordnet sein, so daß sie bei Bedarf ausgewechselt werden kann. Auch die Heizpatrone 3 kann auswechselbar im Gehäuse 1 befestigt sein.

Die beiden Lötbacken 4 und 5 bestehen aus Kupfer, das vorzugsweise vernickelt oder verchromt ist, um ein Verzundern beim Löten zu verhindern. Die Schwenkachse 6 besteht ebenfalls aus vorzugsweise vernickeltem oder verchromtem Kupfer.

Zum Verlöten von Rohren 22 wird zunächst das Betätigungsglied 8 gegen die Kraft der Druckfeder 10 zurückgeschoben. Über die Zugstange 7 wird die Lötbacke 5 um die Achse 6 in ihre Offenstellung geschwenkt, so daß das zu verlötende Rohr 22 bequem in die passende Aufnahme 17 oder 18 eingelegt werden kann. Anschließend kann das Betätigungsglied 8 freigegeben werden, das dann durch die Druckfeder 10 zurückgeschoben wird. Über die Zugstange 7 wird dabei die Lötbacke 5 in ihre Greifstellung geschwenkt, so daß das Rohr 22 in der entsprechenden Aufnahme festgeklemmt wird. Da die Lötbacke 5 in Richtung auf ihre Greif- bzw. Schließstellung durch die Federkraft beaufschlagt ist, kann das Betätigungsglied 8 während des Lötvorganges freigegeben werden. Das Lötgerät kann einen (nicht dargestellten) Ein- und Ausschalter aufweisen, der nach dem Einklemmen des Rohres 22 betätigt wird. Üblicherweise wird aber lediglich der Stecker der Zuleitung 2 in die Steckdose gesteckt, wodurch das Lötgerät bereits eingeschaltet ist. Der Heizdraht 23 wird nach dem Einschalten des Lötgerätes erhitzt, wodurch auch das metallische Rohr 24 der Heizpatrone 3 erhitzt wird.

Dadurch wird die fest auf der Heizpatrone 3 sitzende Lötbacke 4 ebenfalls erhitzt. Über die Schwenkachse 6 wird auch die schwenkbare Lötbacke 5 erhitzt. Da das Lötgerät nur eine einzige Heizpatrone 3 aufweist, kann sie auch bei kompakter Ausbildung des Lötgerätes einen großen Durchmesser aufweisen, so daß dieses Lötgerät auch eine hohe Leistung aufweisen kann. Dadurch können die Lötbacken 4 und 5 ohne Schwierigkeiten auf die geforderte Löttemperatur erhitzt werden. Das zu lötende Rohr 22 muß von den Lötbacken 4 und 5 nicht vollständig umschlossen sein, wie auch die Zeichnung zeigt. Die Lötbacken 4, 5 können so hoch erhitzt werden, daß trotz der nicht vollständigen Umschließung der Rohre 22 eine einwandfreie Lötung ermöglicht wird. Die Schwenkachse 6 erlaubt einen einwandfreien Wärmeübergang auf die Lötbacke 5, so daß sie auf jeden Fall eine so hohe Temperatur hat, daß eine einwandfreie Lötung sichergestellt ist.

Infolge der unterschiedlich großen Aufnahmen 17 und 18 können mit dem Lötgerät ohne Auswechseln der Lötbacken 4, 5 unterschiedlich große Rohre gelötet werden. Da die Böden 15, 15', 16, 16' der Vertiefungen 13, 13', 14, 14' sich über weniger als 180° erstrecken, können in die Aufnahmen 17 und 18 im Durchmesser jeweils unterschiedliche Rohre eingespannt werden. In die größere Aufnahme 17 können somit Rohre mit verschiedenen größeren Durchmessern und in die Aufnahme 18 Rohre mit verschiedenen kleineren Durchmessern eingesetzt werden. Die beiden Aufnahmen 17 und 18 sind vorzugsweise so ausgebildet, daß in sie Rohre mit den gängigen Durchmessergrößen eingesetzt werden können.

Da das Lötgerät nur eine einzige Heizpatrone 3 aufweist, kann das Lötgerät auch kostengünstig hergestellt werden.

Bei einer einfachen Ausführungsform sind die beiden Lötbacken 4, 5 mit nur einer einzigen Aufnahme ausgebildet, deren Böden sich vorzugsweise ebenfalls über weniger als 180° erstrecken, so daß in diese Aufnahme innerhalb eines vorgegebenen Bereiches Rohre unterschiedlicher Durchmesser eingelegt werden können.

**Patentansprüche**

1. Elektrische Lötgerät für Rohre, mit einer an einem Gehäuse (1) gehaltenen Lötbache (4), in der ein Heizelement vorgesehen ist und die mindestens eine Vertiefung aufweist (13), die zusammen mit einer Vertiefung (13') einer weiteren, schwenkbaren Lötbacke (5) in einer Greifstellung eine Aufnahme für das zu lötende Rohr (22) bildet, mit einem zum Verschwenken der weiteren Lötbacke (5) dienenden Betätigungsglied (8) das über ein Verbindungteil (7) mit der weiteren Lötbacke (5) verbunden und mit seinem einen Ende im Gehäuse (1) bewegbar angeordnet ist, das pistolenförmig ausgebildet ist, wobei die weitere Lötbacke (5) unter der Kraft einer Feder (10) in Greifstellung gehalten ist, mit der das Betätigungsglied (8) in Richtung auf die Greifstellung der weiteren Lötbacke (5) belastet ist, dadurch gekennzeichnet, daß das Verbindungsteil (7) als Zug- bzw. Schubstange ausgebildet ist, die mit ihren Enden an der weiteren Lötbacke (5) und am Betätigungsglied (8) angelenkt ist, und daß die beiden Lötbacken (4, 5) gelenkig miteinander verbunden sind.

2. Lötgerät nach Anspruch 1, dadurch gekennzeichnet, daß das Betätigungsglied (8) als Schieber ausgebildet ist.

3. Lötgerät nach Anspruch 1 oder 2, dadurch gekennzeichnet, daß das Betätigungsglied (8) in einer Schiebeführung an der Unterseite (9) des Gehäuses (1) des Lötgerätes gelagert ist.

4. Lötgerät nach einem der Ansprüche 1 bis 3, dadurch gekennzeichnet, daß die die beiden Lötbacken (4, 5) durchsetzende Gelenkachse (6) aus wärmeleitendem Material, vorzugsweise Kupfer, besteht.

5. Lötbacke nach einem der Ansprüche 1 bis 4, dadurch gekennzeichnet, daß die Feder (10), vorzugsweise eine Druckfeder, am Betätigungsglied (8) angreift.

6. Lötgerät nach einem der Ansprüche 1 bis 5, dadurch gekennzeichnet, daß die Lötbacken (4, 5) jeweils mindestens eine weitere Vertiefung aufweisen.

**Revendications**

1. Appareil à souder électrique pour tubes, comprenant une mâchoire de soudage (4) maintenue sur un boîtier (1) dans laquelle est prévu un élément de chauffage et qui présente au moins un creux (13) lequel, conjointement avec un creux (13') d'une mâchoire de soudage supplémentaire pivotante (5), forme dans une position de préhension un logement pour le tube (22) à souder, et un élément de commande (8) pour le pivotement de la mâchoire de soudage supplémentaire (5), qui est relié par l'intermédiaire d'un élément de raccordement (7) à la mâchoire de soudage supplémentaire (5) et dont l'une des extrémités est montée de manière mobile dans le boîtier (1) conformé en pistolet, la mâchoire de soudage supplémentaire (5) étant maintenue dans la position de préhension sous l'action de la force d'un ressort (10) par lequel l'élément de commande (8) est sollicité en direction de la position de préhension de la mâchoire de soudage supplémentaire (5), caractérisé en ce que l'élément de raccordement (7) est conformé en barre de traction et respectivement en bielle dont les extrémités sont articulées sur la mâchoire de soudage supplémentaire (5) et sur l'élément de commande (8); et que les deux mâchoires de soudage (4, 5) sont articulées l'une sur l'autre.

2. Appareil à souder selon la revendication 1, caractérisé en ce que l'élément de commande (8) est conformé en coulisseau.

3. Appareil à souder selon l'une des revendications 1 ou 2, caractérisé en ce que l'élément de commande (8) est monté dans une glissière à la face inférieure (9) du boîtier (1) de l'appareil à souder.

4. Appareil à souder selon l'une des revendications 1 à 3, caractérisé en ce que l'axe d'articulation (6) traversant les deux mâchoires de soudage (4, 5) est constitué d'un matériau conducteur de chaleur, de préférence de cuivre.

5. Appareil à souder selon l'une des revendications 1 à 4, caractérisé en ce que le ressort (10), de préférence un ressort de pression, agit sur l'élément de commande (8).

6. Appareil à souder selon l'une des revendications 1 à 5, caractérisé en ce que les mâchoires de soudage (4, 5) présentent chacune au moins un creux supplémentaire.

**Claims**

1. Electrical soldering apparatus for pipes, with a soldering jaw (4) supported on a housing (1), in which jaw a heating element is provided and which comprises at least one recess (13), which together with a recess (13') in an additional, pivoting soldering jaw (5), in a gripping position, forms a holder for the pipe (22) to be soldered, with an actuating member (8) serving for tilting the additional soldering jaw (5), which actuating member is connected by way of a connecting part (7) to the additional soldering jaw (5) and at one end is arranged to move in the housing (1), which is constructed in the form of a gun, the additional soldering jaw (5) being held in the gripping position under the force of a spring (10), by which the actuating member (8) is biased in the direction of the gripping position of the additional soldering jaw (5), characterised in that the connecting part (7) is constructed as a tie-rod or connecting rod, which is pivoted at its ends on the additional soldering jaw (5) and on the actuating member (8), and that the two soldering jaws (4, 5) are flexibly connected to each other.

2. Soldering apparatus according to Claim 1, characterised in that the actuating member (8) is constructed as a slide.

3. Soldering apparatus according to Claim 1 or 2, characterised in that the actuating member (8) is mounted in a sliding guide on the under side (9) of the housing (1) of the soldering apparatus.

4. Soldering apparatus according to one of Claims 1 to 3, characterised in that the joint pin (6) passing through the two soldering jaws (4, 5) consists of heat conducting material, preferably copper.

5. Soldering jaw according to one of Claims 1 to 4, characterised in that the spring (10), preferably a compression spring, engages on the actuating member (8).

6. Soldering apparatus according to one of Claims 1 to 5, characterised in that the soldering jaws (4, 5) respectively comprise at least one further recess.

EP 0 283 783 B1